# EUROPEAN PATENT SPECIFICATION

(11) **EP 1 211 952 B1**
(45) Date of publication and mention of the grant of the patent: **06.09.2006**
(21) Application number: 00957146.4
(22) Date of filing: 26.07.2000
(51) Int. Cl.: A23K 1/18, A01K 85/00

(54) **FISHBAIT**
FISCHKOEDER
APPAT POUR POISSONS

(30) Priority: 23.08.1999 NO 994057
(43) Date of publication of application: 12.06.2002
(73) Proprietor: Stadtbait AS, 6750 Stadlandet (NO)
(72) Inventor: SJASTAD, Anfinn, N-6750 Stadlandet (NO); SJASTAD, Nils, Per, N-6750 Stadlandet (NO)
(74) Representative: Smaggasgale, Gillian Helen
(86) International application number: PCT/NO2000/000249
(87) International publication number: WO 2001/013738

(56) References cited:
- EP-A- 0 137 748
- WO-A-96/28021
- DE-C- 3 224 365
- US-A- 4 413 014
- DATABASE WPI Section Ch, Week 198303 Derwent Publications Ltd., London, GB; Class C03, AN 1983-05982K XP002901420 & JP 57 198053 A (WORLD PROD YG), 4 December 1982 (1982-12-04)
- DATABASE WPI Section Ch, Week 198303 Derwent Publications Ltd., London, GB; Class C03, AN 1983-05981K XP002901421 & JP 57 198052 A (NIPPON NOSAN KOGYO KK), 4 December 1982 (1982-12-04)

## Description

The present invention relates to the use of natural polymer, preferably starch, for bait and fish feed, the natural polymer according to the present invention being expanded and blended with an odour and/or taste additive which attracts fish. The expansion of the natural polymer is carried out by the use of a suitable device before the polymer is used as bait or fish feed.

The bait normally used in fishing to-day, especially line fishing and the like, is fish which is divided into suitable pieces or alternatively other substances are employed which attract the fish by means of their smell and taste. Such substances, fish and fish offal are similarly used as fish feed in fish farms. As well as being an extremely expensive form of fish feed and bait, in practice this system is encumbered with a number of drawbacks with regard to nature and the environment.

A typical disadvantage of using fish and fish offal as fish feed is linked to the fact that these substances sink relatively quickly and subsequently remain lying and rotting on the bottom in fish pens. This creates unfavourable conditions in fish farms and is clearly undesirable.

A similar disadvantage occurs when using fish, fish offal and related products as bait on hooks. The bait sinks and remains lying on the bottom where it is exposed to mechanical stress against the bottom, which removes the bait from the hook when it becomes caught in stones etc. on the bottom. Further drawbacks are associated with the fact that the bait decomposes after a period in the water, thereby working loose from the hook. Attempts to employ fish offal and fish remains packed in stockings or the like as bait may also result in the use of stocking materials with additives which are unsafe for the fish to eat or which are harmful to the environment.

It is therefore an object of the present invention to provide a bait or fish feed which overcomes the above-mentioned drawbacks. This object is achieved substantially by employing a naturally occurring polymer in an expanded state, with an added odour and/or taste-producing substance which attracts fish. In the present invention, the natural polymer is maize or rice starch.

The starch according to the present invention is expanded before use and to which an odour and/or taste-producing substance is added either before, during or after expansion. The natural polymer is expanded preferably in connection with its use as bait or fish feed. If odour or taste are not added to the non-expanded natural polymer, it can be added during or after the expansion process. The expanded material usually has a spongy consistency, enabling it to attract and retain a moderate amount of an odour or taste-producing substance added to the expanded material. With regard to suitable odour or taste additives, it may be mentioned that most of these are available from, e.g., the Novamont S.P.A. company in Italy.

Among the advantages obtained by using expanded natural polymers according to the present invention particular emphasis may be given to the fact that expanded natural polymer with an added taste and/or odour-producing substance which attracts fish, used as bait, will have buoyancy and in line fishing, e.g., or other kinds of fishing near the seabed the buoyancy will enable the bait to remain at a certain height above the bottom, thus preventing the bait from being destroyed by lying on the bottom and being torn from the hook, or from lying in a position where it is inaccessible or uninteresting to the fish. In addition the bait will be able to move in the current above the seabed, diffusing its smell and taste and thereby attracting fish. Moreover, it will be possible to bring the material on board the fishing vessel in a non-expanded state, resulting in a substantial reduction in the amount to be loaded compared to the volume of the final expanded product. The material is expanded on board before use and may be divided into suitable pieces, for example in an automatic baiting machine with a knife for cutting up bait.

Expanded natural polymer with an odour and/or taste-producing additive, moreover, is a reasonably priced form of bait. During fishing the principal task of bait is to attract fish to bite on the hook and there is therefore no other requirement for bait than that it should fulfil this task in the best possible manner. It is not unusual for a medium-size line fishing vessel to use bait for between NOK 100 000 and 300 000 on one trip. An expanded natural polymer with a taste and/or odour additive will be considerably cheaper. Thus it will also be possible to use larger pieces of bait on the hooks, which will be even more tempting for the fish when the pieces of bait vibrate in the current.

If the fish also eats the bait, it is safe for fish to eat maize or rice starch and as long as the odour and taste additive with any filler is also natural and harmless, then it is safe for people later on to eat fish which have eaten bait according to the present invention or which have been caught with bait according to the present invention.

The use of natural polymers according to the present invention as fish feed in fish farming pens is advantageous since the fish feed remains high up in the pen, sinking gradually and slowly so that the fish has time to eat the feed before it sinks to the bottom. The use of expanded natural polymer with added taste and/or odour which attracts the fish can also have advantages by being used as a carrier for extra additives which the fish has to eat, such as vitamins, minerals and medication such as antibiotics, etc. Thus it will be easier to administer such additives to fish in farms without them sinking rapidly to the bottom. There is therefore a greater chance of the total amount of additive being consumed without it being left lying on the bottom of the pen.

Further advantages are associated with the choice of natural polymers which are broken down after a relatively short time in the water, e.g. 24-48 hours. The result of this is that expanded natural polymers used as fish feed do not cause feed substances to be left lying on the bottom of the pen during the rotting process.

There are also advantages associated with the logistics of using expanded natural polymer with taste and/or odour additive as fish feed with additional additives. A moderate volume of the product can be transported to a suitable location near the fish farm, where it can be expanded and minerals, vitamins, medication or the like may be added before it is used as fish feed, if these have not already been added. The degree of expansion can vary, but will essentially be over 50% relative to the starting point.

In a preferred embodiment, the rice or maize starch may be blended with additional filler and produced as small pieces or pellets which are subsequently expanded. Odour and/or taste-producing additives may be added to the pieces or pellets before expansion, or these may be added during or after the expansion process. The expansion is carried out by heating and possibly the supply of compressed air. A suitable expansion chamber may be provided and the expansion process will be individual according to which natural polymer is used. Heating to between 30°C and 90°C, possibly with the addition of compressed air, will be capable of expanding most suitable polymers in a relatively short time. The expanded material may then be divided into pieces according to wishes and requirements.

An additional substance may further be added to the natural polymer in order to adapt it to use as bait or fish feed. Such substances may, e.g., be stabilising agents in order to prevent the odour or taste-producing additive from reacting unfavourably with the natural polymer or filler in the product, which can break down the bait or fish feed too early or too late, or to prevent the taste/odour or appearance from being altered in an unfavourable manner.

## Claims

1. The use of natural polymer in expanded form, with added odour and/or taste additive which attracts fish, as bait or fish feed, **characterised in that** the natural polymer is maize or rice starch.

2. The use of natural polymer according to Claim 1, where the natural polymer is in the form of pieces or pellets before expansion.

3. The use of natural polymer according to Claim 2, where filler is added to the natural polymer.

4. The use of natural polymer according to any one of Claims 1 to 3, where the odour and/or taste-producing additive which attracts fish is added to the pieces or pellets.

5. The use of natural polymer according to any one of Claims 1 to 4, where the odour and/or taste-producing additive which attracts fish is added during expansion.

6. The use of natural polymer according to any one of Claims 1 to 4, where the odour and/or taste-producing additive which attracts fish is added in expanded form.

## Patentansprüche

1. Verwendung eines natürlichen Polymers in ausgedehnter Form, mit zugefügtem Geruchs- und/oder Geschmackszusatzstoff, welcher Fische anzieht, als Köder oder Fischfutter, **dadurch gekennzeichnet, dass** das natürliche Polymer Mais- oder Reisstärke ist.

2. Verwendung eines natürlichen Polymers nach Anspruch 1, wobei das natürliche Polymer in Form von Stücken oder Pellets vor der Ausdehnung vorliegt.

3. Verwendung eines natürlichen Polymers nach Anspruch 2, wobei Füllstoff dem natürlichen Polymer zugegeben wird.

4. Verwendung eines natürlichen Polymers nach einem der Ansprüche 1 bis 3, wobei der Geruchs- und/oder Geschmacks-erzeugende Zusatzstoff, welcher Fische anzieht, den Stücken oder Pellets zugefügt wird.

5. Verwendung eines natürlichen Polymers nach einem der Ansprüche 1 bis 4, wobei der Geruchs- und/oder Geschmacks-erzeugende Zusatzstoff, welcher Fische anzieht, während der Ausdehnung zugegeben wird.

6. Verwendung eines natürlichen Polymers nach einem der Ansprüche 1 bis 4, wobei der Geruchs- und/oder Geschmacks-erzeugende Zusatzstoff, welcher Fische anzieht, in ausgedehnter Form zugegeben wird.

## Revendications

1. Utilisation d'un polymère naturel sous forme expansée, avec ajout d'odeur et/ou additif de goût qui attire les poissons, sous forme d'appât ou d'aliments pour poissons, **caractérisé en ce que** le polymère naturel est de l'amidon de maïs ou de riz.

2. Utilisation d'un polymère naturel selon la revendication 1, où le polymère naturel est sous la forme de pièces ou de pastilles avant expansion.

3. Utilisation d'un polymère naturel selon la revendication 2, où une charge est ajoutée au polymère naturel.

4. Utilisation d'un polymère naturel selon l'une quelconque des revendications 1 à 3, où l'additif de production d'odeur et/ou de goût qui attire les poissons, est ajouté aux pièces ou pastilles.

5. Utilisation d'un polymère naturel selon l'une quelconque des revendications 1 à 4, où l'additif de production d'odeur et/ou de goût qui attire les poissons, est ajouté pendant l'expansion.

6. Utilisation d'un polymère naturel selon l'une quelconque des revendications 1 à 4, où l'additif de production d'odeur et/ou de goût qui attire les poissons, est ajouté sous forme expansée.
